# EUROPEAN PATENT SPECIFICATION

(11) **EP 4 503 515 B1**
(45) Date of publication and mention of the grant of the patent: **20.05.2026**
(21) Application number: 24166771.6
(22) Date of filing: 27.03.2024
(51) Int. Cl.: H04L 9/40, H04W 12/03, H04W 12/02, H04L 69/22, H04W 84/12

(54) **FRAME FORMAT OF SECURE MEDIUM ACCESS CONTROL HEADER**
RAHMENFORMAT EINES STEUERHEADERS FÜR SICHEREN MEDIENZUGANG
FORMAT DE TRAME D'EN-TÊTE DE CONTRÔLE D'ACCÈS AU SUPPORT SÉCURISÉ

(30) Priority: 04.08.2023 US 202363517880 P
(43) Date of publication of application: 05.02.2025
(73) Proprietor: INTEL Corporation, Santa Clara, CA 95054 (US)
(72) Inventor: BRAVO, Daniel, Portland, 97229 (US); HUANG, Po-Kai, San Jose, 95131 (US); ALEXANDER, Danny, Neve Efraim Monoson (IL); BERG, Johannes, 32760 Detmold (DE); OUZIELI, Ido, 6382732 Tel Aviv (IL); PEER, Ilan, 71721 Modiin JM (IL)
(74) Representative: Viering, Jentschura & Partner mbB Patent- und Rechtsanwälte

(56) References cited:
- EP-A1- 4 293 963
- EP-A2- 1 679 852
- US-A1- 2016 285 834
- US-A1- 2023 232 218

## Description

### CROSS-REFERENCE TO RELATED APPLICATIONS

The present application claims priority to US Provisional Patent Application Ser. No. 63/517,880 filed on August 4, 2023.

### TECHNICAL FIELD

This disclosure generally relates to systems and methods for wireless communications and, more particularly, to a frame format of secure medium access control (MAC) header.

### BACKGROUND

Wireless devices are becoming widely prevalent and are increasingly requesting access to wireless channels. The Institute of Electrical and Electronics Engineers (IEEE) is developing one or more standards that utilize Orthogonal Frequency-Division Multiple Access (OFDMA) in channel allocation.

EP 4 293 963 A1 discloses systems, methods, and devices related to secure MAC header. A device may generate a frame comprising one or more fields that are encrypted using a second encryption key different from a first encryption key used in a frame body of a data frame or a management frame. The device may cause to send the frame to one or more station devices (STAs).

US 2023232218 A1 discloses embodiments for encrypting media access control (MAC Header fields for WLAN privacy enhancement. For example, a transceiver of a STA or an AP can set a real time MAC header bit in a payload of an aggregated MAC Protocol Data Unit (A-MPDU) subframe to an actual value of a power management (PM) field of a MAC header of the A-MPDU subframe.

US 2016285834 A1 discloses methods, systems, apparatuses, and devices are described for wireless station privacy using encryption to protect destination and source addresses of data frames. In one example, a method includes identifying a source address, a destination address, or any combination thereof to be transmitted in a plain-text portion of a data frame. The method may also include extracting the identified source address, the identified destination address, or any combination thereof. The method also includes inserting the extracted source address, the extracted destination address, or any combination thereof in a frame body of the data frame. The method may further include encrypting the inserted source address, the inserted destination address, or any combination thereof in the frame body.

EP 1 679 852 A2 discloses, for data protection in a wireless network system, a frame, including its MAC header and payload, is encrypted with an initialization vector modified at each set state in a wireless network system, such that wirelessly transmitted data is prevented from being exposed to unauthorized users.

### SUMMARY

The summary of the invention pursued in the present application is set out in the appended set of claims.

### BRIEF DESCRIPTION OF THE DRAWINGS

FIG. 1 is a network diagram illustrating an example network environment for secure MAC header, in accordance with one or more example embodiments of the present disclosure.
FIGs. 2-9 depict illustrative schematic diagrams for secure MAC header, in accordance with one or more example embodiments of the present disclosure.

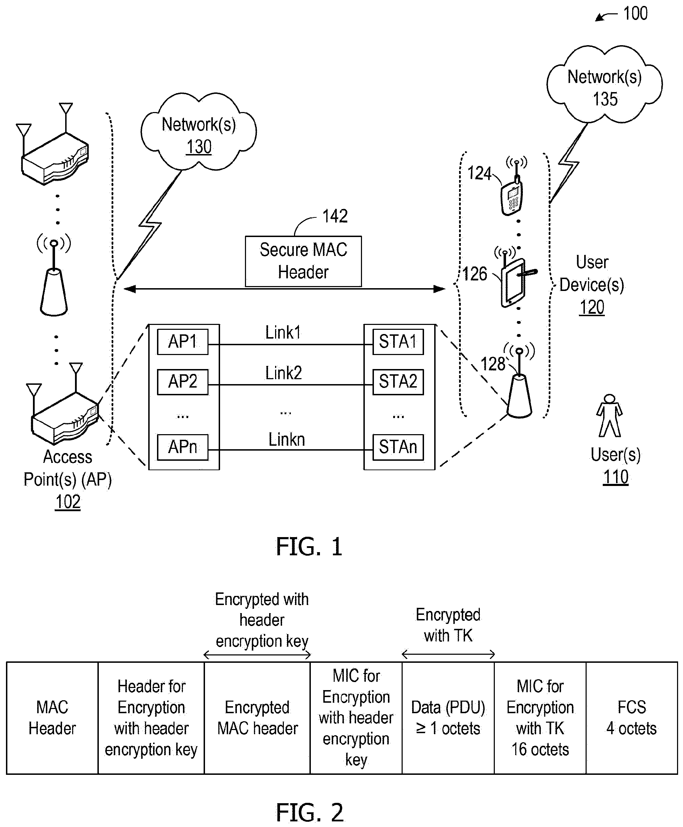

FIG. 2 shows an example of a secure MAC header design, in which several parts of the MAC header are encrypted.

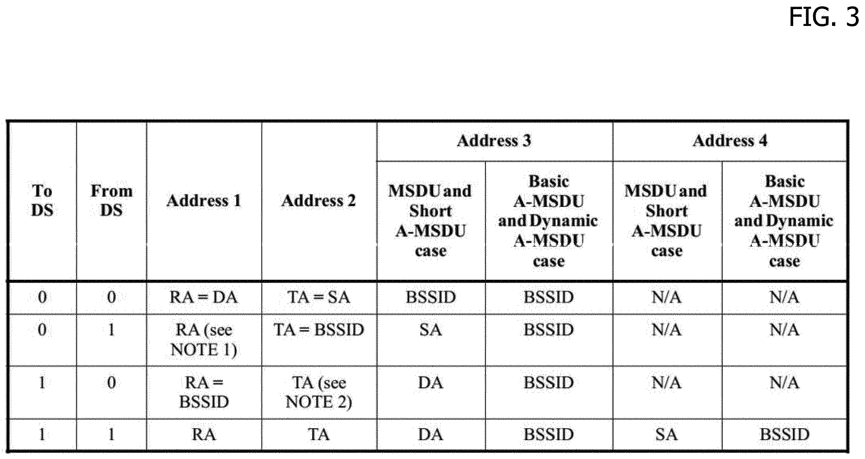

FIG. 3 shows a table illustrating address field contents.

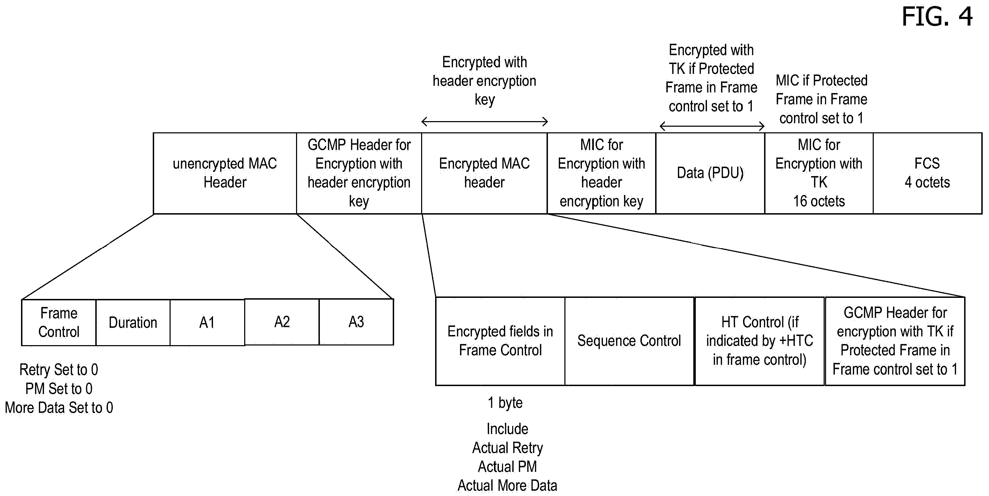

FIG. 4 shows schematically an example of a secure MAC header for a management frame.

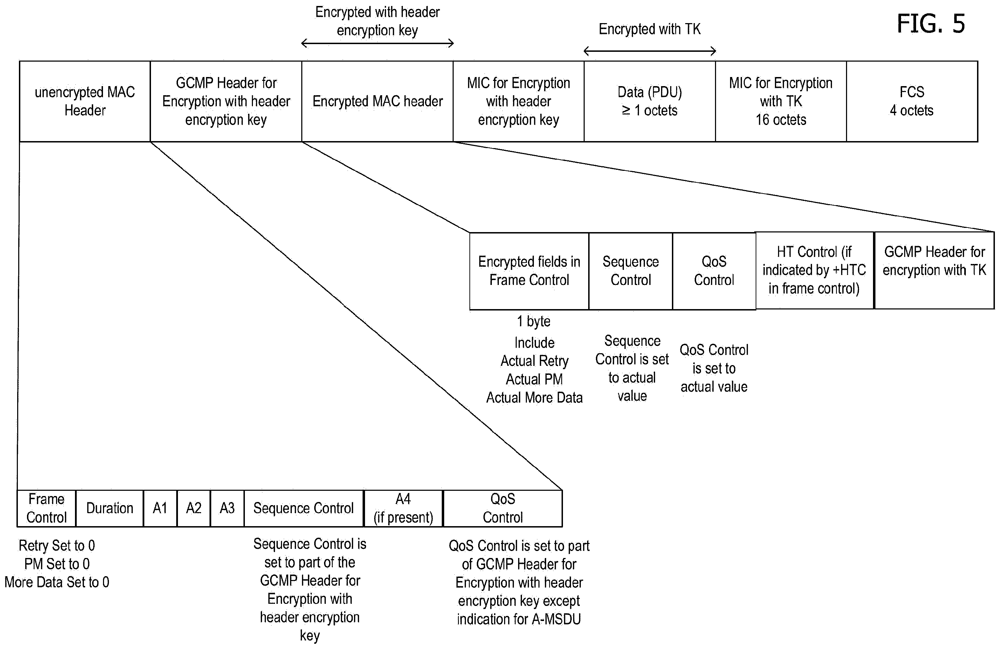

FIG. 5 shows schematically an example of a secure MAC header for QoS data frame.

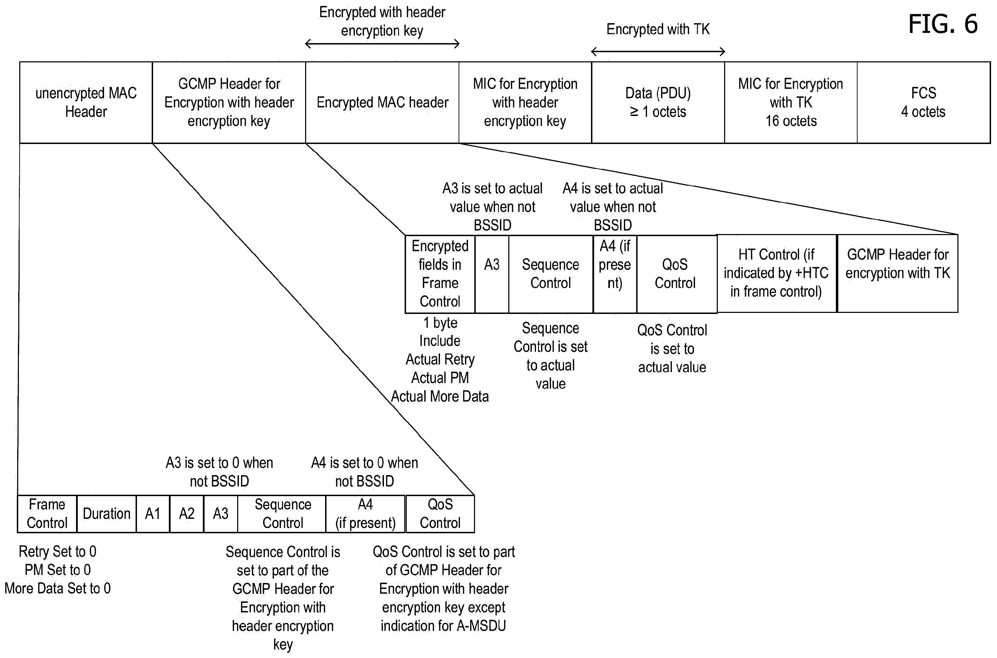

FIG 6 shows schematically an example of an alternative design of a secure MAC header for QoS data frame to protect A3 and A4 from transmitting in plain text when it is not BSSID.

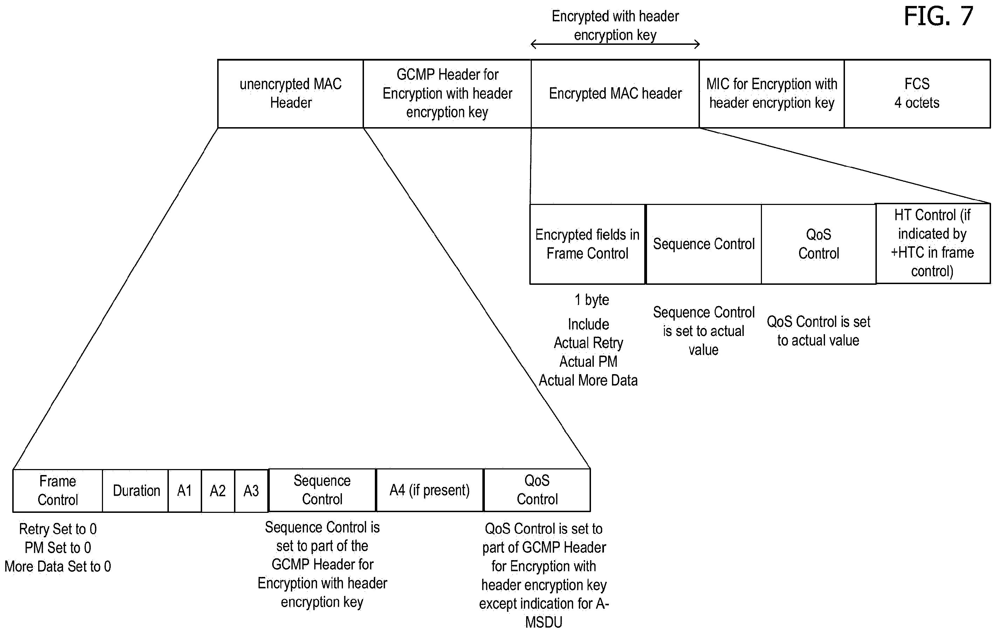

FIG 7 shows schematically an example of a secure MAC header for a QoS Null frame.

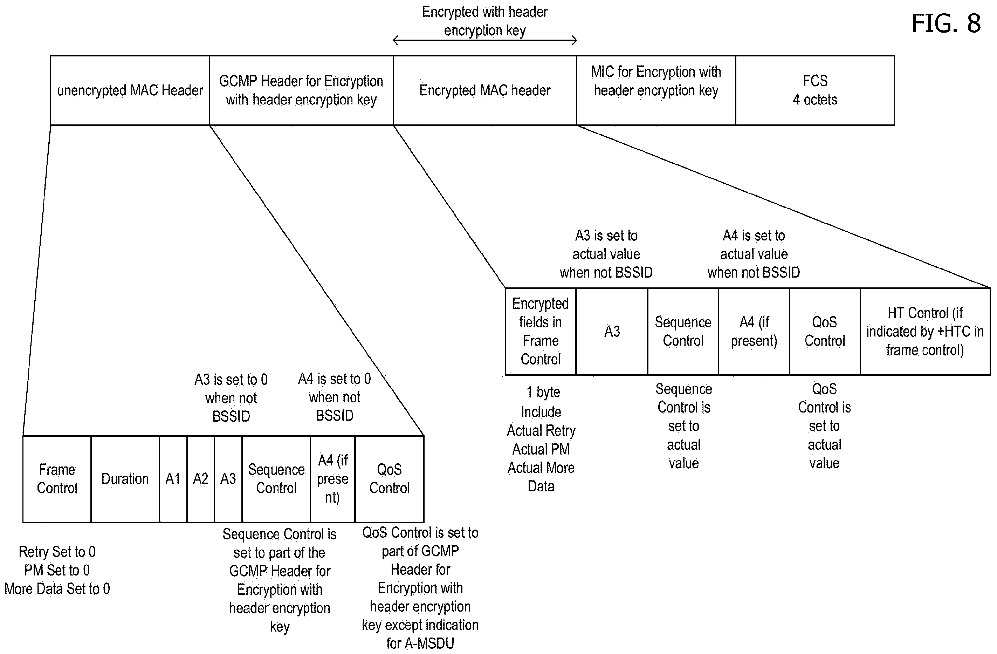

FIG 8 shows schematically an example of an alternative design of a secure MAC header for a QoS Null frame.

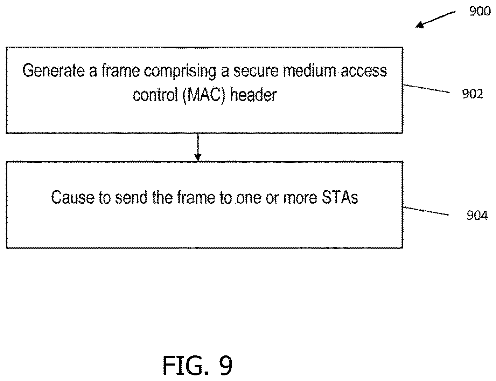

FIG. 9 illustrates a flow diagram of a process for an illustrative secure MAC header system, in accordance with one or more example embodiments of the present disclosure.

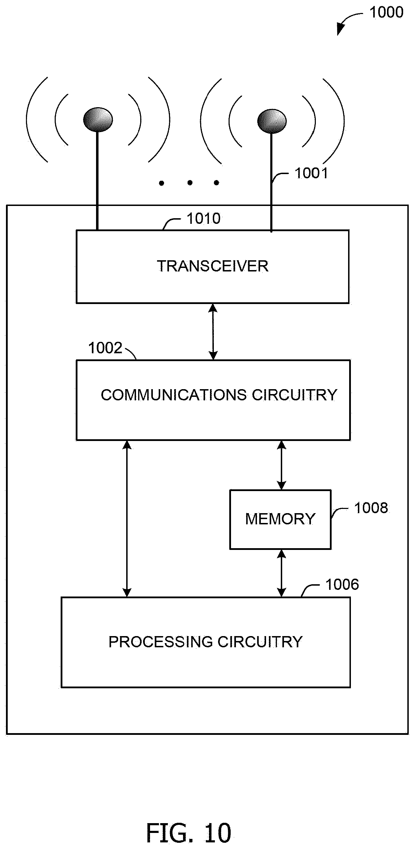

FIG. 10 illustrates a functional diagram of an exemplary communication station that may be suitable for use as a user device, in accordance with one or more example embodiments of the present disclosure.

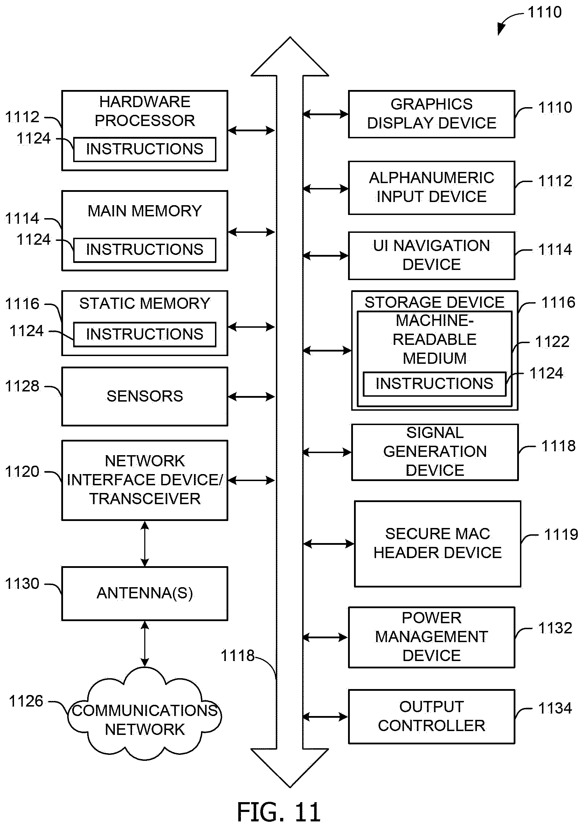

FIG. 11 illustrates a block diagram of an example machine upon which any of one or more techniques (e.g., methods) may be performed, in accordance with one or more example embodiments of the present disclosure.

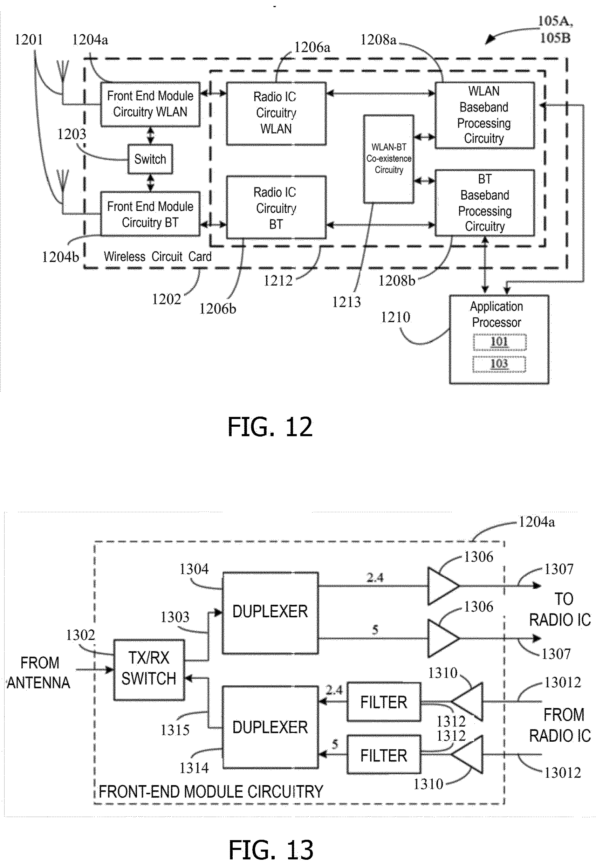

FIG. 12 is a block diagram of a radio architecture in accordance with some examples.
FIG. 13 illustrates an example front-end module circuitry for use in the radio architecture of FIG. 12, in accordance with one or more example embodiments of the present disclosure.

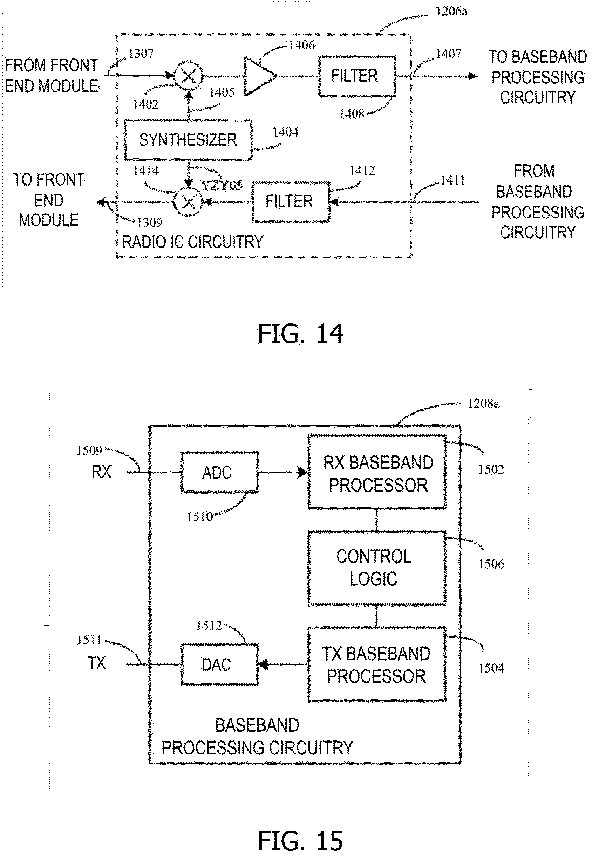

FIG. 14 illustrates an example radio IC circuitry for use in the radio architecture of FIG. 12, in accordance with one or more example embodiments of the present disclosure.
FIG. 15 illustrates an example baseband processing circuitry for use in the radio architecture of FIG. 12, in accordance with one or more example embodiments of the present disclosure.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

Wi-Fi 8 (IEEE 802.11bn or ultra high reliability (UHR)) is the next generation of Wi-Fi and a successor to the IEEE 802.11be (Wi-Fi 7) standard. In line with all previous Wi-Fi standards, Wi-Fi 8 will aim to improve wireless performance in general along with introducing new and innovative features to further advance Wi-Fi technology.

Secure medium access control (MAC) header design has been discussed and a design has been proposed to encrypt several parts of the MAC header with high-level. However, the design does not specify the format for the MAC header that is transmitted without encryption. This is critical to make sure that 3^{rd} party parsing can still be done to achieve frame filtering, network allocation vector (NAV) setting, and intra-Basic Service Set (BSS) and inter-BSS classification. The design also should be considered together with overhead minimization when this scheme is used. Further, the design also does not consider management frame and data frame separately, which will have design difference due to above consideration.

Example embodiments of the present disclosure relate to systems, methods, and devices for the frame format of secure MAC header. For the design of an individually addressed management frame, existing 3^{rd} party devices can still parse the frame to achieve A1 filtering, NAV setting, and intra-BSS and inter-BSS classification. Similar consideration for data frame. The alternative for protecting Address 3 (A3) and Address 4 (A4) also protects leakage of Source Address (SA)/Destination Address (DA) information in plain text in the MAC header. An alternative is to always use Aggregated MAC Service Data Unit (A-MSDU), which always introduces 14 bytes overhead by default.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

FIG. 1 is a network diagram illustrating an example network environment of secure MAC header, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

In some embodiments, the user devices 120 and the AP 102 may include one or more computer systems similar to that of the functional diagram of FIG. 10 and/or the example machine/system of FIG. 11.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax, 802.11be, etc.), 6 GHz channels (e.g., 802.11ax, 802.11be, etc.), or 60 GHZ channels (e.g. 802.11ad, 802.11ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1, a user device 120 may be in communication with one or more APs 102. For example, one or more APs 102 may implement a secure MAC header 142 with one or more user devices 120. The one or more APs 102 may be multi-link devices (MLDs) and the one or more user device 120 may be non-AP MLDs. Each of the one or more APs 102 may comprise a plurality of individual APs (e.g., AP1, AP2, ..., APn, where n is an integer) and each of the one or more user devices 120 may comprise a plurality of individual STAs (e.g., STA1, STA2, ..., STAn). The AP MLDs and the non-AP MLDs may set up one or more links (e.g., Link1, Link2, ..., Linkn) between each of the individual APs and STAs. It is understood that the above descriptions are for the purposes of illustration and are not meant to be limiting.

FIGs. 2-9 depict illustrative schematic diagrams for secure MAC header, in accordance with one or more example embodiments of the present disclosure.

Secure MAC header design has been discussed and a design has been proposed to encrypt several parts of the MAC header with high-level format shown below. FIG. 2 shows an example of a secure MAC header design, in which several parts of the MAC header are encrypted.

However, the design does not specify the format for the MAC header that is transmitted without encryption. This is critical to make sure that 3^{rd} party parsing can still be done to achieve frame filtering, NAV setting, and intra-BSS and inter-BSS classification. The design also should be considered together with overhead minimization when this scheme is used.

Specifically, for the management frame, A3 is required for 3^{rd} party parsing because 3^{rd} party relies on the BSS Identifier (BSSID) setting of A3 to do intra-BSS and inter-BSS classification.

For a data frame, A3, A4, and indication for A-MSDU in Quality of Service (QoS) Control is required for 3^{rd} party parsing because 3^{rd} party relies on the A-MSDU indication in QoS control to determine if A3 and A4 include BSSID to do intra-BSS and inter-BSS classification.

FIG. 3 shows a table illustrating address field contents.

Further, the design also does not consider management frame and data frame separately, which will have design difference due to above consideration. The design does not address the format requirement for management frame and data frame separately and does not specify the exact MAC header that needs to be transmitted without encryption to enable 3^{rd} party parsing. The design also does not consider how to minimize additional overhead.

For a management frame, a secure MAC header system may propose the following high-level design.

FIG. 4 shows schematically an example of a secure MAC header for a management frame.

For QoS data frame, a secure MAC header system may facilitate the following high-level design.

FIG. 5 shows schematically an example of a secure MAC header for QoS data frame.

For QoS data frame, an alternative design is described below to protect A3 and A4 from transmitting in plain text when it is not BSSID.

FIG 6 shows schematically an example of an alternative design of a secure MAC header for QoS data frame to protect A3 and A4 from transmitting in plain text when it is not BSSID.

For QoS Null frame, a secure MAC header system may facilitate the following high-level design. Note that QoS Null frame does not have a frame body.

FIG 7 shows schematically an example of the secure MAC header for the QoS Null frame.

FIG 8 shows schematically an example of an alternative design of a secure MAC header for a QoS Null frame.

Aspects described below provide various details associated with secure MAC headers described in FIGs. 4-8 and in corresponding examples how corresponding secure MAC headers illustrated in FIGs. 4-8 can be obtained.

In a first embodiment:
Starting with the individually addressed management frame with MAC header protection.

The unencrypted MAC header includes the following fields.
- Frame control:

Follow existing setting with Retry set to 0, Power Management (PM) set to 0 or More Data set to 0.

To provide privacy, +HTC (+High Throughput Control) can be always set to 1, and if there is no carried Hight Throughput (HT) control information, control ID 15 for HT control can be used.
- Duration
- Address 1
- Address 2
- Address 3

Galois/Counter Mode Protocol (GCMP) header for encryption with header encryption key includes the following:
- Packet number (PN): The size can be 4 bytes rather than 6 bytes after PN truncation.
- Key ID: Two bits
- Extended Initialization Vector (Ext IV): One bit and always set to 1.
- Reserved fields: 13 bits as defined in GCMP header today.

Encrypted MAC header includes the following:
- Encrypted fields in frame control: Including Retry field with actual value, PM field with actual value, and More Data field with actual value. At least one byte to provide byte alignment.
- Sequence Control.
- HT control if +HTC in frame control is set to 1.
- GCMP header for encryption of frame body with Temporal Key (TK) if frame body of management frame is encrypted with TK, which is indicated by protected frame bit in frame control.

Message Integrity Code (MIC) for encryption with a header encryption key. The size can be 8 bytes to have MIC truncation.

The additional overhead compared with truncation. The individually addressed management frame without MAC header protection is 15 bytes: 1 byte of encrypted fields in frame control, 6 bytes of GCMP header for encryption with a header encryption key, and 8 bytes of MIC.

Finally, the Additional Authentication Data (AAD) construction for MAC header encryption includes the following:
- Frame control: No modification and no mask out.
- Address 1.
- Address 2.
- Address 3.

An example of such Secure MAC header is provided in FIG. 4.

In a second embodiment:
Continuing with the individually addressed data frame with MAC header protection.

The unencrypted MAC header includes the following fields.
- Frame control:
   Follow existing setting with Retry set to 0, PM set to 0, or More Data set to 0.

To provide privacy, +HTC can be always set to 1 and if there is no carried HT control information, control ID 15 for HT control can be used.
- Duration.
- Address 1.
- Address 2.
- Address 3: Can be set to 0 if indicates SA or DA.
- Sequence control: Set to first two bytes of the GCMP header for encryption with a header encryption key, i.e., PN0 and PN1.

Address 4 (if present): Can be set to 0 if indicates SA or DA.

### QoS Control:

Except Bit 7, which is used to indicate A-MSDU present, the remaining 15 bits indicate the third and fourth bytes of the GCMP header for encryption with header encryption key without Ext IV. Note that Ext IV in GCMP header is always set to 1.

GCMP header for encryption with header encryption key includes the following:
- Remaining bytes of packet number: can be two bytes after PN truncation.
   Encrypted MAC header includes the following:
   - Encrypted fields in frame control: Including Retry field with actual value, PM field with actual value, and More Data field with actual value. At least one byte to provide byte alignment.
   - Address 3:

Has the actual value of Address 3.

Can be present only if Address 3 indicates SA or DA.

Can be present only if peer support.
- Sequence Control:

Has the actual value of Sequence control.
- Address 4:

Has the actual value of Address 4.

Can be present only if Address 4 indicates SA or DA.

Can be present only if peer support and Address 4 are present.
- QoS Control:

Has the actual value of QoS control.
- HT control if +HTC in frame control is set to 1.
- GCMP header for encryption of frame body with TK:

Only present if the data frame is not a QoS Null frame, which can also be indicated by the Protected Frame bit in Frame control.

MIC for encryption with a header encryption key
∘ The size can be 8 bytes to have MIC truncation.

Additional overhead compared with existing individually addressed data frames without MAC header protection is 15 bytes: 1 byte of encrypted fields in frame control, 6 bytes of GCMP header for encryption with header encryption key, and 8 bytes of MIC. If A3 and A4 protection are added, then it is 27 bytes.

Finally, the AAD construction for MAC header encryption includes the following:
- Frame control:

No modification and no mask out.
- Address 1.
- Address 2.
- Address 3.
- Sequence control:

Mask to 0 since it indicates GCMP Header.
- Address 4 (if present).
- QoS Control:

Mask to 0 except A-MSDU present bit since other bits indicates GCMP header.

Four examples are provided below.

The first example is for QoS Data frame that is not QoS null frame and does not have A3 and A4 encryption, which is illustrated in FIG. 5.

The second example is for QoS Data frame that is not QoS null and has A3 and A4 encryption, which is illustrated in FIG. 6.

The third example is for QoS Null frame that does not have A3 and A4 encryption, which is illustrated in FIG. 7.

The fourth example is for QoS Null frame that has A3 and A4 encryption, which is illustrated in FIG. 8.

It is understood that the above descriptions are for the purposes of illustration and are not meant to be limiting.

FIG. 9 illustrates a flow diagram of illustrative process 900 for a secure MAC header system, in accordance with one or more example embodiments of the present disclosure.

At block 902, a device (e.g., the user device(s) 120 and/or the AP 102 of FIG. 1 and/or the secure MAC header device 1119 of FIG. 11) may generate a frame comprising a secure medium access control (MAC) header.

At block 904, the device may cause to send the frame to one or more STAs.

It is understood that the above descriptions are for the purposes of illustration and are not meant to be limiting.

FIG. 10 shows a functional diagram of an exemplary communication station 1000, in accordance with one or more example embodiments of the present disclosure. In one embodiment, FIG. 10 illustrates a functional block diagram of a communication station that may be suitable for use as an AP 102 (FIG. 1) or a user device 120 (FIG. 1) in accordance with some embodiments. The communication station 1000 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 1000 may include communications circuitry 1002 and a transceiver 1010 for transmitting and receiving signals to and from other communication stations using one or more antennas 1001. The communications circuitry 1002 may include circuitry that can operate the physical layer (PHY) communications and/or medium access control (MAC) communications for controlling access to the wireless medium, and/or any other communications layers for transmitting and receiving signals. The communication station 1000 may also include processing circuitry 1006 and memory 1008 arranged to perform the operations described herein. In some embodiments, the communications circuitry 1002 and the processing circuitry 1006 may be configured to perform operations detailed in the above figures, diagrams, and flows.

In accordance with some embodiments, the communications circuitry 1002 may be arranged to contend for a wireless medium and configure frames or packets for communicating over the wireless medium. The communications circuitry 1002 may be arranged to transmit and receive signals. The communications circuitry 1002 may also include circuitry for modulation/demodulation, upconversion/downconversion, filtering, amplification, etc. In some embodiments, the processing circuitry 1006 of the communication station 1000 may include one or more processors. In other embodiments, two or more antennas 1001 may be coupled to the communications circuitry 1002 arranged for sending and receiving signals. The memory 1008 may store information for configuring the processing circuitry 1006 to perform operations for configuring and transmitting message frames and performing the various operations described herein. The memory 1008 may include any type of memory, including non-transitory memory, for storing information in a form readable by a machine (e.g., a computer). For example, the memory 1008 may include a computer-readable storage device, read-only memory (ROM), random-access memory (RAM), magnetic disk storage media, optical storage media, flash-memory devices and other storage devices and media.

In some embodiments, the communication station 1000 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 1000 may include one or more antennas 1001. The antennas 1001 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 1000 may include one or more of a keyboard, a display, a non-volatile memory port, multiple antennas, a graphics processor, an application processor, speakers, and other mobile device elements. The display may be an LCD screen including a touch screen.

Although the communication station 1000 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field- programmable gate arrays (FPGAs), application specific integrated circuits (ASICs), radio- frequency integrated circuits (RFICs) and combinations of various hardware and logic circuitry for performing at least the functions described herein. In some embodiments, the functional elements of the communication station 1000 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 1000 may include one or more processors and may be configured with instructions stored on a computer-readable storage device.

FIG. 11 illustrates a block diagram of an example of a machine 1100 or system upon which any one or more of the techniques (e.g., methodologies) discussed herein may be performed. In other embodiments, the machine 1 1 00 may operate as a standalone device or may be connected (e.g., networked) to other machines. In a networked deployment, the machine 1100 may operate in the capacity of a server machine, a client machine, or both in server-client network environments. In an example, the machine 1100 may act as a peer machine in peer-to-peer (P2P) (or other distributed) network environments. The machine 1100 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 1100 may include a hardware processor 1102 (e.g., a central processing unit (CPU), a graphics processing unit (GPU), a hardware processor core, or any combination thereof), a main memory 1104 and a static memory 1106, some or all of which may communicate with each other via an interlink (e.g., bus) 1108. The machine 1 1 00 may further include a power management device 1 1 32, a graphics display device 1110, an alphanumeric input device 1112 (e.g., a keyboard), and a user interface (UI) navigation device 1114 (e.g., a mouse). In an example, the graphics display device 1110, alphanumeric input device 1 1 12, and UI navigation device 1 1 14 may be a touch screen display. The machine 1100 may additionally include a storage device (i.e., drive unit) 1116, a signal generation device 1118 (e.g., a speaker), a secure MAC header device 1119, a network interface device/transceiver 1120 coupled to antenna(s) 1 1 30, and one or more sensors 1 1 28, such as a global positioning system (GPS) sensor, a compass, an accelerometer, or other sensor. The machine 1100 may include an output controller 1134, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 1102 for generation and processing of the baseband signals and for controlling operations of the main memory 1104, the storage device 1116, and/or the secure MAC header device 1119. The baseband processor may be provided on a single radio card, a single chip, or an integrated circuit (IC).

The storage device 1116 may include a machine readable medium 1122 on which is stored one or more sets of data structures or instructions 1124 (e.g., software) embodying or utilized by any one or more of the techniques or functions described herein. The instructions 1124 may also reside, completely or at least partially, within the main memory 1104, within the static memory 1106, or within the hardware processor 1102 during execution thereof by the machine 1100. In an example, one or any combination of the hardware processor 1 1 02, the main memory 1 1 04, the static memory 1106, or the storage device 1116 may constitute machine-readable media.

The secure MAC header device 1119 may carry out or perform any of the operations and processes (e.g., process 900) described and shown above.

It is understood that the above are only a subset of what the secure MAC header device 1119 may be configured to perform and that other functions included throughout this disclosure may also be performed by the secure MAC header device 1119.

While the machine-readable medium 1122 is illustrated as a single medium, the term "machine-readable medium" may include a single medium or multiple media (e.g., a centralized or distributed database, and/or associated caches and servers) configured to store the one or more instructions 1124.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 1100 and that cause the machine 1 1 00 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 1124 may further be transmitted or received over a communications network 1126 using a transmission medium via the network interface device/transceiver 1120 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 1120 may include one or more physical jacks (e.g., Ethernet, coaxial, or phone jacks) or one or more antennas to connect to the communications network 1126. In an example, the network interface device/transceiver 1120 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 1100 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

FIG. 12 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 1204a-b, radio IC circuitry 1206a-b and baseband processing circuitry 1208a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 1204a-b may include a WLAN or Wi-Fi FEM circuitry 1204a and a Bluetooth (BT) FEM circuitry 1204b. The WLAN FEM circuitry 1204a may include a receive signal path comprising circuitry configured to operate on WLAN RF signals received from one or more antennas 1201, to amplify the received signals and to provide the amplified versions of the received signals to the WLAN radio IC circuitry 1206a for further processing. The BT FEM circuitry 1204b may include a receive signal path which may include circuitry configured to operate on BT RF signals received from one or more antennas 1201, to amplify the received signals and to provide the amplified versions of the received signals to the BT radio IC circuitry 1206b for further processing. FEM circuitry 1204a may also include a transmit signal path which may include circuitry configured to amplify WLAN signals provided by the radio IC circuitry 1206a for wireless transmission by one or more of the antennas 1201. In addition, FEM circuitry 1204b may also include a transmit signal path which may include circuitry configured to amplify BT signals provided by the radio IC circuitry 1206b for wireless transmission by the one or more antennas. In the embodiment of FIG. 12, although FEM 1204a and FEM 1204b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 1206a-b as shown may include WLAN radio IC circuitry 1206a and BT radio IC circuitry 1206b. The WLAN radio IC circuitry 1206a may include a receive signal path which may include circuitry to down-convert WLAN RF signals received from the FEM circuitry 1204a and provide baseband signals to WLAN baseband processing circuitry 1208a. BT radio IC circuitry 1206b may in turn include a receive signal path which may include circuitry to down-convert BT RF signals received from the FEM circuitry 1204b and provide baseband signals to BT baseband processing circuitry 1208b. WLAN radio IC circuitry 1206a may also include a transmit signal path which may include circuitry to up-convert WLAN baseband signals provided by the WLAN baseband processing circuitry 1208a and provide WLAN RF output signals to the FEM circuitry 1204a for subsequent wireless transmission by the one or more antennas 1201. BT radio IC circuitry 1206b may also include a transmit signal path which may include circuitry to up-convert BT baseband signals provided by the BT baseband processing circuitry 1208b and provide BT RF output signals to the FEM circuitry 1204b for subsequent wireless transmission by the one or more antennas 1201. In the embodiment of FIG. 12, although radio IC circuitries 1206a and 1206b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 1208a-b may include a WLAN baseband processing circuitry 1208a and a BT baseband processing circuitry 1208b. The WLAN baseband processing circuitry 1208a may include a memory, such as, for example, a set of RAM arrays in a Fast Fourier Transform or Inverse Fast Fourier Transform block (not shown) of the WLAN baseband processing circuitry 1208a. Each of the WLAN baseband circuitry 1208a and the BT baseband circuitry 1208b may further include one or more processors and control logic to process the signals received from the corresponding WLAN or BT receive signal path of the radio IC circuitry 1206a-b, and to also generate corresponding WLAN or BT baseband signals for the transmit signal path of the radio IC circuitry 1206a-b. Each of the baseband processing circuitries 1208a and 1208b may further include physical layer (PHY) and medium access control layer (MAC) circuitry, and may further interface with a device for generation and processing of the baseband signals and for controlling operations of the radio IC circuitry 1206a-b.

Referring still to FIG. 12, according to the shown embodiment, WLAN-BT coexistence circuitry 1213 may include logic providing an interface between the WLAN baseband circuitry 1208a and the BT baseband circuitry 1208b to enable use cases requiring WLAN and BT coexistence. In addition, a switch 1203 may be provided between the WLAN FEM circuitry 1204a and the BT FEM circuitry 1204b to allow switching between the WLAN and BT radios according to application needs. In addition, although the antennas 1201 are depicted as being respectively connected to the WLAN FEM circuitry 1204a and the BT FEM circuitry 1204b, embodiments include within their scope the sharing of one or more antennas as between the WLAN and BT FEMs, or the provision of more than one antenna connected to each of FEM 1204a or 1204b.

In some embodiments, the front-end module circuitry 1204a-b, the radio IC circuitry 1206a-b, and baseband processing circuitry 1208a-b may be provided on a single radio card, such as wireless radio card 1202. In some other embodiments, the one or more antennas 1201, the FEM circuitry 1204a-b and the radio IC circuitry 1206a-b may be provided on a single radio card. In some other embodiments, the radio IC circuitry 1206a-b and the baseband processing circuitry 1208a-b may be provided on a single chip or integrated circuit (IC), such as IC 1212.

In some embodiments, the wireless radio card 1202 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 6, the BT baseband circuitry 1208b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

FIG. 13 illustrates WLAN FEM circuitry 1204a in accordance with some embodiments. Although the example of FIG. 13 is described in conjunction with the WLAN FEM circuitry 1204a, the example of FIG. 13 may be described in conjunction with the example BT FEM circuitry 1204b (FIG. 12), although other circuitry configurations may also be suitable.

In some embodiments, the FEM circuitry 1204a may include a TX/RX switch 1302 to switch between transmit mode and receive mode operation. The FEM circuitry 1204a may include a receive signal path and a transmit signal path. The receive signal path of the FEM circuitry 1204a may include a low-noise amplifier (LNA) 1306 to amplify received RF signals 1303 and provide the amplified received RF signals 1307 as an output (e.g., to the radio IC circuitry 1206a-b (FIG. 12)). The transmit signal path of the circuitry 1204a may include a power amplifier (PA) to amplify input RF signals 1309 (e.g., provided by the radio IC circuitry 1206a-b), and one or more filters 1312, such as band-pass filters (BPFs), low-pass filters (LPFs) or other types of filters, to generate RF signals 1315 for subsequent transmission (e.g., by one or more of the antennas 1201 (FIG. 12)) via an example duplexer 1314.

In some dual-mode embodiments for Wi-Fi communication, the FEM circuitry 1204a may be configured to operate in either the 2.4 GHz frequency spectrum or the 5 GHz frequency spectrum. In these embodiments, the receive signal path of the FEM circuitry 1204a may include a receive signal path duplexer 1304 to separate the signals from each spectrum as well as provide a separate LNA 1306 for each spectrum as shown. In these embodiments, the transmit signal path of the FEM circuitry 1204a may also include a power amplifier 1310 and a filter 1312, such as a BPF, an LPF or another type of filter for each frequency spectrum and a transmit signal path duplexer 1304 to provide the signals of one of the different spectrums onto a single transmit path for subsequent transmission by the one or more of the antennas 1201 (FIG. 12). In some embodiments, BT communications may utilize the 2.4 GHz signal paths and may utilize the same FEM circuitry 1204a as the one used for WLAN communications.

FIG. 14 illustrates radio IC circuitry 1206a in accordance with some embodiments. The radio IC circuitry 1206a is one example of circuitry that may be suitable for use as the WLAN or BT radio IC circuitry 1206a/XZX06b (FIG. 12), although other circuitry configurations may also be suitable. Alternatively, the example of FIG. 14 may be described in conjunction with the example BT radio IC circuitry 1206b.

In some embodiments, the radio IC circuitry 1206a may include a receive signal path and a transmit signal path. The receive signal path of the radio IC circuitry 1206a may include at least mixer circuitry 1402, such as, for example, down-conversion mixer circuitry, amplifier circuitry 1406 and filter circuitry 1408. The transmit signal path of the radio IC circuitry 1206a may include at least filter circuitry 1412 and mixer circuitry 1414, such as, for example, up-conversion mixer circuitry. Radio IC circuitry 1206a may also include synthesizer circuitry 1404 for synthesizing a frequency 1405 for use by the mixer circuitry 1402 and the mixer circuitry 1414. The mixer circuitry 1402 and/or 1414 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 14 illustrates only a simplified version of a radio IC circuitry, and may include, although not shown, embodiments where each of the depicted circuitries may include more than one component. For instance, mixer circuitry 1414 may each include one or more mixers, and filter circuitries 1408 and/or 1412 may each include one or more filters, such as one or more BPFs and/or LPFs according to application needs. For example, when mixer circuitries are of the direct-conversion type, they may each include two or more mixers.

In some embodiments, mixer circuitry 1402 may be configured to down-convert RF signals 1307 received from the FEM circuitry 1204a-b (FIG. 12) based on the synthesized frequency 1405 provided by synthesizer circuitry 1404. The amplifier circuitry 1406 may be configured to amplify the down-converted signals and the filter circuitry 1408 may include an LPF configured to remove unwanted signals from the down-converted signals to generate output baseband signals 1407. Output baseband signals 1407 may be provided to the baseband processing circuitry 1208a-b (FIG. 12) for further processing. In some embodiments, the output baseband signals 1407 may be zero-frequency baseband signals, although this is not a requirement. In some embodiments, mixer circuitry 1402 may comprise passive mixers, although the scope of the embodiments is not limited in this respect.

In some embodiments, the mixer circuitry 1414 may be configured to up-convert input baseband signals 1411 based on the synthesized frequency 1405 provided by the synthesizer circuitry 1404 to generate RF output signals 1309 for the FEM circuitry 1204a-b. The baseband signals 1411 may be provided by the baseband processing circuitry 1208a-b and may be filtered by filter circuitry 1412. The filter circuitry 1412 may include an LPF or a BPF, although the scope of the embodiments is not limited in this respect.

In some embodiments, the mixer circuitry 1402 and the mixer circuitry 1414 may each include two or more mixers and may be arranged for quadrature down-conversion and/or up-conversion respectively with the help of synthesizer 1404. In some embodiments, the mixer circuitry 1402 and the mixer circuitry 1414 may each include two or more mixers each configured for image rejection (e.g., Hartley image rejection). In some embodiments, the mixer circuitry 1402 and the mixer circuitry 1414 may be arranged for direct down-conversion and/or direct up-conversion, respectively. In some embodiments, the mixer circuitry 1402 and the mixer circuitry 1414 may be configured for super-heterodyne operation, although this is not a requirement.

Mixer circuitry 1402 may comprise, according to one embodiment: quadrature passive mixers (e.g., for the in-phase (I) and quadrature phase (Q) paths). In such an embodiment, RF input signal 1307 from FIG. 14 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 1405 of synthesizer 1404 (FIG. 14). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 1307 (FIG. 13) may comprise a balanced signal, although the scope of the embodiments is not limited in this respect. The I and Q baseband output signals may be provided to low-noise amplifier, such as amplifier circuitry 1406 (FIG. 14) or to filter circuitry 1408 (FIG. 14).

In some embodiments, the output baseband signals 1407 and the input baseband signals 1411 may be analog baseband signals, although the scope of the embodiments is not limited in this respect. In some alternate embodiments, the output baseband signals 1407 and the input baseband signals 1411 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 1404 may be a fractional-N synthesizer or a fractional N/N+1 synthesizer, although the scope of the embodiments is not limited in this respect as other types of frequency synthesizers may be suitable. For example, synthesizer circuitry 1404 may be a delta-sigma synthesizer, a frequency multiplier, or a synthesizer comprising a phase-locked loop with a frequency divider. According to some embodiments, the synthesizer circuitry 1404 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 1404 may be provided by a voltage controlled oscillator (VCO), although that is not a requirement. A divider control input may further be provided by either the baseband processing circuitry 1208a-b (FIG. 12) depending on the desired output frequency 1405. In some embodiments, a divider control input (e.g., N) may be determined from a look-up table (e.g., within a Wi-Fi card) based on a channel number and a channel center frequency as determined or indicated by the example application processor 1210. The application processor 1210 may include, or otherwise be connected to, one of the example secure signal converter 101 or the example received signal converter 103 (e.g., depending on which device the example radio architecture is implemented in).

In some embodiments, synthesizer circuitry 1404 may be configured to generate a carrier frequency as the output frequency 1405, while in other embodiments, the output frequency 1405 may be a fraction of the carrier frequency (e.g., one-half the carrier frequency, one-third the carrier frequency). In some embodiments, the output frequency 1405 may be a LO frequency (fLO).

FIG. 15 illustrates a functional block diagram of baseband processing circuitry 1208a in accordance with some embodiments. The baseband processing circuitry 1208a is one example of circuitry that may be suitable for use as the baseband processing circuitry 1208a (FIG. 12), although other circuitry configurations may also be suitable. Alternatively, the example of FIG. 14 may be used to implement the example BT baseband processing circuitry 1208b of FIG. 12.

The baseband processing circuitry 1208a may include a receive baseband processor (RX BBP) 1502 for processing receive baseband signals 1409 provided by the radio IC circuitry 1206a-b (FIG. 12) and a transmit baseband processor (TX BBP) 1504 for generating transmit baseband signals 1411 for the radio IC circuitry 1206a-b. The baseband processing circuitry 1208a may also include control logic 1506 for coordinating the operations of the baseband processing circuitry 1208a.

In some embodiments (e.g., when analog baseband signals are exchanged between the baseband processing circuitry 1208a-b and the radio IC circuitry 1206a-b), the baseband processing circuitry 1208a may include ADC 1510 to convert analog baseband signals 1509 received from the radio IC circuitry 1206a-b to digital baseband signals for processing by the RX BBP 1502. In these embodiments, the baseband processing circuitry 1208a may also include DAC 1512 to convert digital baseband signals from the TX BBP 1504 to analog baseband signals 1511.

In some embodiments that communicate OFDM signals or OFDMA signals, such as through baseband processor 1208a, the transmit baseband processor 1504 may be configured to generate OFDM or OFDMA signals as appropriate for transmission by performing an inverse fast Fourier transform (IFFT). The receive baseband processor 1502 may be configured to process received OFDM signals or OFDMA signals by performing an FFT. In some embodiments, the receive baseband processor 1502 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 12, in some embodiments, the antennas 1201 (FIG. 12) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 1201 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The following examples pertain to further embodiments.

Example 1 may include a device comprising processing circuitry coupled to storage, the processing circuitry configured to: generate a frame comprising a secure medium access control (MAC) header; and cause to send the frame to one or more STAs.

Example 2 may include the device of example 1 and/or some other example herein, wherein the secure MAC header may be encrypted using an encryption key.

Example 3 may include the device of example 1 and/or some other example herein, wherein the secure MAC header comprises one or more encrypted fields in a frame control field of the secure MAC header.

Example 4 may include the device of example 1 and/or some other example herein, further comprising a transceiver configured to transmit and receive wireless signals.

Example 5 may include the device of example 4 and/or some other example herein, further comprising an antenna coupled to the transceiver to cause to send the frame.

Example 6 may include a non-transitory computer-readable medium storing computer-executable instructions which when executed by one or more processors result in performing operations comprising: generating a frame comprising a secure medium access control (MAC) header; and causing to send the frame to one or more STAs.

Example 7 may include the non-transitory computer-readable medium of example 6 and/or some other example herein, wherein the secure MAC header may be encrypted using an encryption key.

Example 8 may include the non-transitory computer-readable medium of example 6 and/or some other example herein, wherein the secure MAC header comprises one or more encrypted fields in a frame control field of the secure MAC header.

Example 9 may include a method comprising: generating, by one or more processors, a frame comprising a secure medium access control (MAC) header; and causing to send the frame to one or more STAs.

Example 10 may include the method of example 9 and/or some other example herein, wherein the secure MAC header may be encrypted using an encryption key.

Example 11 may include the method of example 9 and/or some other example herein, wherein the secure MAC header comprises one or more encrypted fields in a frame control field of the secure MAC header.

Example 12 may include an apparatus comprising means for: generating a frame comprising a secure medium access control (MAC) header; and causing to send the frame to one or more STAs.

Example 13 may include the apparatus of example 12 and/or some other example herein, wherein the secure MAC header may be encrypted using an encryption key.

Example 14 may include the apparatus of example 12 and/or some other example herein, wherein the secure MAC header comprises one or more encrypted fields in a frame control field of the secure MAC header.

Example 15 may include one or more non-transitory computer-readable media comprising instructions to cause an electronic device, upon execution of the instructions by one or more processors of the electronic device, to perform one or more elements of a method described in or related to any of examples 1-14, or any other method or process described herein.

Example 16 may include an apparatus comprising logic, modules, and/or circuitry to perform one or more elements of a method described in or related to any of examples 1-14, or any other method or process described herein.

Example 17 may include a method, technique, or process as described in or related to any of examples 1-14, or portions or parts thereof.

Example 18 may include an apparatus comprising: one or more processors and one or more computer readable media comprising instructions that, when executed by the one or more processors, cause the one or more processors to perform the method, techniques, or process as described in or related to any of examples 1-14, or portions thereof.

Example 19 may include a method of communicating in a wireless network as shown and described herein.

Example 20 may include a system for providing wireless communication as shown and described herein.

Example 21 may include a device for providing wireless communication as shown and described herein.

Example 22 includes a device, the device including processing circuitry coupled to storage, the processing circuitry configured to: generate a frame including a medium access control (MAC) header including one or more unencrypted fields and one or more encrypted fields, wherein the frame is one of a management frame or a data frame and the one or more unencrypted fields comprise an address 3, A3, field; and instruct to send the frame to one or more STAs.

Example 23 may include the device of example 22, wherein the one or more encrypted fields are encrypted using an encryption key.

Example 24 may include the device of example 22 or example 23, wherein the one or more encrypted fields comprise an encrypted frame control field including a first retry field, a first power management, PM, field, and a first more data field representative of corresponding features of the frame.

Example 25 may include the device of example 24, wherein the one or more unencrypted fields comprise an unencrypted frame control field including a second retry field, a second PM field, and a second more data field, each of the second retry field, the second PM field, and the second more data field being set to 0.

Example 26 may include the device of any one of examples 22 to 25, wherein the one or more unencrypted fields further comprise a duration field, an address 1, A1, field, and an address 2, A2, field.

Example 27 may include the device of any one of examples 22 to 26, wherein the frame is the data frame and the one or more unencrypted fields further comprise an address 4, A4, field and an indication for an Aggregated MAC Service Data Unit, A-MSDU, in a Quality of Service, QoS, Control field.

Example 28 may include the device of example 27, wherein the one or more unencrypted fields further comprise a sequence control field including a first portion of a Galois/Counter Mode Protocol (GCMP) header for encryption with header encryption key; wherein the QoS Control field includes a second portion of the GCMP header for encryption with header encryption key; wherein the frame further includes a GCMP header field including a third portion of the GCMP header for encryption with header encryption key.

Example 29 may include the device of example 28, wherein the sequence control field including first and second bytes of packet number, PN, associated with the GCMP header for encryption with header encryption key; wherein bits of the QoS Control field other than the indication for the A-MSDU are representative of third and fourth bytes of the PN without an Extended Initialization Vector, Ext IV, bit; and wherein the GCMP header field includes further bytes of the PN other than the first, the second, the third and the fourth bytes of the PN.

Example 30 may include the device of any one of examples 27 to 29, wherein the one or more encrypted fields comprise a further sequence control field representative of a sequence number and a fragment number of the frame.

Example 31 may include the device of any one of examples 27 to 30, wherein the one or more encrypted fields comprise a further QoS control field representative of an actual QoS control field of the frame.

Example 32 may include the device of any one of examples 27 to 31, wherein the A3 field is representative of one of a destination address, DA, a source address, SA, or an L2 identifier of a basic service set, BSSID.

Example 33 may include the device of any one of examples 27 to 31, wherein the A3 field is set to 0 if an actual A3 field of the frame includes one of a DA or a SA; wherein the one or more encrypted fields further comprise a further A3 field including the one of the DA or the SA.

Example 34 may include the device of example 33, wherein the A4 field is set to 0 if an actual A4 field of the frame includes one of a DA or a SA; wherein the one or more encrypted fields further comprise a further A4 field including the one of the DA or the SA.

Example 35 may include the device of any one of examples 27 to 34, wherein the data frame is a QoS Null data frame.

Example 36 may include the device of any one of examples 27 to 35, wherein the one or more encrypted fields further comprise a message integrity code for encryption with a header encryption key.

Example 37 may include the device of any one of examples 22 to 36, may further include a transceiver configured to transmit and receive wireless signals.

Example 38 may include the device of example 37, may further include an antenna coupled to the transceiver to cause to send the frame.

Example 39, includes a method including: generating a frame including a medium access control (MAC) header including one or more unencrypted fields and one or more encrypted fields, wherein the frame is one of a management frame or a data frame and the one or more unencrypted fields comprise an address 3, A3, field; and instructing to send the frame to one or more STAs.

Example 40 may include the method of example 39, wherein the one or more encrypted fields are encrypted using an encryption key.

Example 41 may include the method of example 39 or example 40, wherein the one or more encrypted fields comprise an encrypted frame control field including a first retry field, a first power management, PM, field, and a first more data field representative of corresponding features of the frame.

Example 42 may include the method of example 41, wherein the one or more unencrypted fields comprise an unencrypted frame control field including a second retry field, a second PM field, and a second more data field, each of the second retry field, the second PM field, and the second more data field being set to 0.

Example 43 may include the method of any one of examples 39 to 42, wherein the one or more unencrypted fields further comprise a duration field, an address 1, A1, field, and an address 2, A2, field.

Example 44 may include the method of any one of examples 39 to 43, wherein the frame is the data frame and the one or more unencrypted fields further comprise an address 4, A4, field and an indication for an Aggregated MAC Service Data Unit, A-MSDU, in a Quality of Service, QoS, Control field.

Example 45 may include the method of example 44, wherein the one or more unencrypted fields further comprise a sequence control field including a first portion of a Galois/Counter Mode Protocol (GCMP) header for encryption with header encryption key; wherein the QoS Control field includes a second portion of the GCMP header for encryption with header encryption key; wherein the frame further includes a GCMP header field including a third portion of the GCMP header for encryption with header encryption key.

Example 46 may include the method of example 45, wherein the sequence control field including first and second bytes of packet number, PN, associated with the GCMP header for encryption with header encryption key; wherein bits of the QoS Control field other than the indication for the A-MSDU are representative of third and fourth bytes of the PN without an Extended Initialization Vector, Ext IV, bit; and wherein the GCMP header field includes further bytes of the PN other than the first, the second, the third and the fourth bytes of the PN.

Example 47 may include the method of any one of examples 44 to 46, wherein the one or more encrypted fields comprise a further sequence control field representative of a sequence number and a fragment number of the frame.

Example 48 may include the method of any one of examples 44 to 47, wherein the one or more encrypted fields comprise a further QoS control field representative of an actual QoS control field of the frame.

Example 49 may include the method of any one of examples 44 to 48, wherein the A3 field is representative of one of a destination address, DA, a source address, SA, or an L2 identifier of a basic service set, BSSID.

Example 50 may include the method of any one of examples 44 to 48, wherein the A3 field is set to 0 if an actual A3 field of the frame includes one of a DA or a SA; wherein the one or more encrypted fields further comprise a further A3 field including the one of the DA or the SA.

Example 51 may include the method of example 50, wherein the A4 field is set to 0 if an actual A4 field of the frame includes one of a DA or a SA; wherein the one or more encrypted fields further comprise a further A4 field including the one of the DA or the SA.

Example 52 may include the method of any one of examples 44 to 51, wherein the data frame is a QoS Null data frame.

Example 53 may include the method of any one of examples 44 to 52, wherein the one or more encrypted fields further comprise a message integrity code for encryption with a header encryption key.

Example 54 includes a non-transitory computer-readable medium including one or more instructions which, if executed by a processor, cause the processor to perform the method of any one of examples 39 to 53.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subj ect-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Although specific terms are employed herein, they are used in a generic and descriptive sense only and not for purposes of limitation.

## Claims

1. A device (1000), the device (1000) comprising processing circuitry (1006) coupled to storage (1008), the processing circuitry (1006) configured to:
generate a frame comprising a medium access control, MAC, header comprising one or more unencrypted fields and one or more encrypted fields, wherein the frame is a quality of service, QoS, data frame and wherein the one or more unencrypted fields comprise an address 3, A3, field, a sequence control field, and a QoS control field; and
instruct to send the frame to one or more stations, STAs (120),
wherein the sequence control field is configured to carry a first portion of a packet number, PN, associated with a Galois/Counter Mode Protocol, GCMP, header for encrypting the one or more encrypted fields; and
wherein the QoS control field is configured to carry a second portion of the PN.

2. The device (1000) of claim 1, wherein the one or more encrypted fields are encrypted using an encryption key.

3. The device (1000) of claim 1 or claim 2, wherein the one or more encrypted fields comprise an encrypted frame control field comprising a first retry field, a first power management, PM, field, and a first more data field representative of corresponding features of the frame.

4. The device (1000) of claim 3, wherein the one or more unencrypted fields comprise an unencrypted frame control field comprising a second retry field, a second PM field, and a second more data field, each of the second retry field, the second PM field, and the second more data field being set to 0.

5. The device (1000) of any one of claims 1 to 4, wherein the one or more unencrypted fields further comprise a duration field, an address 1, A1, field, and an address 2, A2, field.

6. The device (1000) of any one of claims 1 to 5, wherein the one or more unencrypted fields further comprise an address 4, A4, field and wherein the QoS Control field comprises an indication for an Aggregated MAC Service Data Unit, A-MSDU.

7. The device (1000) of claim 6, wherein the one or more encrypted fields comprise a further sequence control field representative of a sequence number and a fragment number of the frame.

8. The device (1000) of any one of claims 6 or 7, wherein the one or more encrypted fields comprise a further QoS control field representative of an actual QoS control value of the frame.

9. The device (1000) of any one of claims 6 to 8, wherein the A3 field is representative of one of a destination address, DA, a source address, SA, or an a basic service set identifier, BSSID.

10. The device (1000) of any one of claims 6 to 8,
wherein the one or more encrypted fields further comprise a further A3 representative of an actual A3 value of the frame, the actual A3 value being a destination address, DA, or a source address, SA; and
wherein the A3 field of the one or more encrypted fields is set to 0.

11. The device (1000) of claim 10,
wherein the one or more encrypted fields further comprise a further A4 field representative of an actual A4 value of the frame, the actual A4 value being a destination address, DA, or a source address, SA; and
wherein the A4 field of the one or more unencrypted fields is set to 0.

12. The device (1000) of any one of claims 6 to 11, wherein the frame is a QoS Null data frame.

13. The device (1000) of any one of claims 6 to 11, wherein the one or more encrypted fields further comprise a message integrity code for encryption with a header encryption key.

14. A method comprising:
generating a frame comprising a medium access control, MAC, header comprising one or more unencrypted fields and one or more encrypted fields, wherein the frame is a quality of service, QoS, data frame and wherein the one or more unencrypted fields comprise an address 3, A3, field; and
instructing to send the frame to one or more stations, STAs (120);
wherein the sequence control field is configured to carry a first portion of a packet number, PN, associated with a Galois/Counter Mode Protocol, GCMP, header for encrypting the one or more encrypted fields; and
wherein the QoS control field is configured to carry a second portion of the PN.

15. A non-transitory computer-readable medium comprising one or more instructions (1124) which, if executed by a processor, cause the processor to perform the method of claim 14.

## Patentansprüche

1. Vorrichtung (1000), wobei die Vorrichtung (1000) eine Verarbeitungsschaltungsanordnung (1006) umfasst, die mit einem Speicher (1008) gekoppelt ist, wobei die Verarbeitungsschaltungsanordnung (1006) zu Folgendem ausgelegt ist:
Erzeugen eines Frames, der einen Medienzugriffssteuerungs- bzw. MAC-Header umfasst, der ein oder mehrere unverschlüsselte Felder und ein oder mehrere verschlüsselte Felder umfasst, wobei der Frame ein Dienstgüte- bzw. QoS-Datenframe ist und wobei das eine oder die mehreren unverschlüsselten Felder ein Adresse-3- bzw. A3-Feld, ein Sequenzsteuerfeld und ein QoS-Steuerfeld umfassen; und
Anweisen des Sendens des Frames an eine oder mehrere Stationen bzw. STAs (120),
wobei das Sequenzsteuerfeld dazu ausgelegt ist, einen ersten Teil einer Paketnummer bzw. PN zu führen, die mit einem Galois/Counter-Mode-Protocol- bzw. GCMP-Header zum Verschlüsseln des einen oder der mehreren verschlüsselten Felder assoziiert ist; und
wobei das QoS-Steuerfeld dazu ausgelegt ist, einen zweiten Teil der PN zu führen.

2. Vorrichtung (1000) nach Anspruch 1, wobei das eine oder die mehreren verschlüsselten Felder unter Verwendung eines Verschlüsselungsschlüssels verschlüsselt sind.

3. Vorrichtung (1000) nach Anspruch 1 oder Anspruch 2, wobei das eine oder die mehreren verschlüsselten Felder ein verschlüsseltes Framesteuerfeld umfassen, das ein erstes Wiederholungsfeld, ein erstes Leistungsmanagement- bzw. PM-Feld und ein erstes Mehrdatenfeld umfasst, die entsprechende Merkmale des Frames repräsentieren.

4. Vorrichtung (1000) nach Anspruch 3, wobei das eine oder die mehreren unverschlüsselten Felder ein unverschlüsseltes Framesteuerfeld umfassen, das ein zweites Wiederholungsfeld, ein zweites PM-Feld und ein zweites Mehrdatenfeld umfasst, wobei das zweite Wiederholungsfeld, das zweite PM-Feld und das zweite Mehrdatenfeld jeweils auf 0 gesetzt sind.

5. Vorrichtung (1000) nach einem der Ansprüche 1 bis 4, wobei das eine oder die mehreren unverschlüsselten Felder ferner ein Dauerfeld, ein Adresse-1- bzw. A1-Feld und ein Adresse-2- bzw. A2-Feld umfassen.

6. Vorrichtung (1000) nach einem der Ansprüche 1 bis 5, wobei das eine oder die mehreren unverschlüsselten Felder ferner ein Adresse-4- bzw. A4-Feld umfassen und wobei das QoS-Steuerfeld eine Angabe für eine aggregierte MAC-Dienstdateneinheit bzw. A-MSDU umfasst.

7. Vorrichtung (1000) nach Anspruch 6, wobei das eine oder die mehreren verschlüsselten Felder ein weiteres Sequenzsteuerfeld umfassen, das eine Sequenznummer und eine Fragmentnummer des Frames repräsentiert.

8. Vorrichtung (1000) nach einem der Ansprüche 6 oder 7, wobei das eine oder die mehreren verschlüsselten Felder ein weiteres QoS-Steuerfeld umfassen, das einen tatsächlichen QoS-Steuerwert des Frames repräsentiert.

9. Vorrichtung (1000) nach einem der Ansprüche 6 bis 8, wobei das A3-Feld eines von einer Zieladresse bzw. DA, einer Quelladresse bzw. SA oder einer Basisdienstsatzkennung bzw. BSSID repräsentiert.

10. Vorrichtung (1000) nach einem der Ansprüche 6 bis 8, Wobei das eine oder die mehreren verschlüsselten Felder ferner ein weiteres A3 umfassen, das einen tatsächlichen A3-Wert des Frames repräsentiert, wobei der tatsächliche A3-Wert eine Zieladresse bzw. DA oder eine Quelladresse bzw. SA ist; und
wobei das A3-Feld des einen oder der mehreren verschlüsselten Felder auf 0 gesetzt ist.

11. Vorrichtung (1000) nach Anspruch 10,
Wobei das eine oder die mehreren verschlüsselten Felder ferner ein weiteres A4-Feld umfassen, das einen tatsächlichen A4-Wert des Frames repräsentiert, wobei der tatsächliche A4-Wert eine Zieladresse bzw. DA oder eine Quelladresse bzw. SA ist; und
wobei das A4-Feld des einen oder der mehreren unverschlüsselten Felder auf 0 gesetzt ist.

12. Vorrichtung (1000) nach einem der Ansprüche 6 bis 11, wobei der Frame ein QoS-Null-Datenframe ist.

13. Vorrichtung (1000) nach einem der Ansprüche 6 bis 11, wobei das eine oder die mehreren verschlüsselten Felder ferner einen Nachrichtenintegritätscode zur Verschlüsselung mit einem Header-Verschlüsselungsschlüssel umfassen.

14. Verfahren, umfassend:
Erzeugen eines Frames, der einen Medienzugriffssteuerungs- bzw. MAC-Header umfasst, der ein oder mehrere unverschlüsselte Felder und ein oder mehrere verschlüsselte Felder umfasst, wobei der Frame ein Dienstgüte- bzw. QoS-Datenframe ist und wobei das eine oder die mehreren unverschlüsselten Felder ein Adresse-3- bzw. A3-Feld umfassen; und
Anweisen des Sendens des Frames an eine oder mehrere Stationen bzw. STAs (120),
wobei das Sequenzsteuerfeld dazu ausgelegt ist, einen ersten Teil einer Paketnummer bzw. PN zu führen, die mit einem Galois/Counter-Mode-Protocol- bzw. GCMP-Header zum Verschlüsseln des einen oder der mehreren verschlüsselten Felder assoziiert ist; und
wobei das QoS-Steuerfeld dazu ausgelegt ist, einen zweiten Teil der PN zu führen.

15. Nichtflüchtiges computerlesbares Medium eine, das eine oder mehrere Anweisungen (1124) umfasst, die bei Ausführung durch einen Prozessor bewirken, dass der Prozessor das Verfahren nach Anspruch 14 durchführt.

## Revendications

1. Dispositif (1000), le dispositif (1000) comprenant des circuits (1006) de traitement couplés à une mémoire (1008), les circuits (1006) de traitement étant configurés pour :
générer une trame comprenant un en-tête de contrôle d'accès au support, MAC, comprenant un ou plusieurs champs non cryptés et un ou plusieurs champs cryptés, la trame étant une trame de données de qualité de service, QoS, et le ou les champs non cryptés comprenant un champ d'adresse 3, A3, un champ de contrôle de séquence et un champ de contrôle de QoS ; et
ordonner d'envoyer la trame à une ou plusieurs stations, STA (120),
le champ de contrôle de séquence étant configuré pour transporter une première partie d'un numéro de paquet, PN, associé à un en-tête de protocole de mode Galois/compteur, GCMP, pour crypter le ou les champs cryptés ; et
le champ de contrôle de QoS étant configuré pour porter une seconde partie du PN.

2. Dispositif (1000) selon la revendication 1, le ou les champs cryptés étant cryptés à l'aide d'une clé de cryptage.

3. Dispositif (1000) selon la revendication 1 ou la revendication 2, le ou les champs cryptés comprenant un champ de contrôle de trame crypté comprenant un premier champ de relance, un premier champ de gestion de puissance, PM, et un premier champ de données supplémentaires représentatif de caractéristiques correspondantes de la trame.

4. Dispositif (1000) selon la revendication 3, le ou les champs non cryptés comprenant un champ de contrôle de trame non crypté comprenant un second champ de relance, un second champ PM et un second champ de données supplémentaires, chacun du second champ de relance, du second champ PM et du second champ de données supplémentaires étant positionné à 0.

5. Dispositif (1000) selon l'une quelconque des revendications 1 à 4, le ou les champs non cryptés comprenant en outre un champ de durée, un champ d'adresse 1, A1, et un champ d'adresse 2, A2.

6. Dispositif (1000) selon l'une quelconque des revendications 1 à 5, le ou les champs non cryptés comprenant en outre un champ d'adresse 4, A4, et le champ de contrôle de QoS comprenant une indication pour une unité de données de service MAC agrégé, A-MSDU.

7. Dispositif (1000) selon la revendication 6, le ou les champs cryptés comprenant un champ de contrôle de séquence supplémentaire représentatif d'un numéro de séquence et d'un numéro de fragment de la trame.

8. Dispositif (1000) selon l'une quelconque des revendications 6 ou 7, le ou les champs cryptés comprenant un champ de contrôle de QoS supplémentaire représentatif d'une valeur de commande de QoS réelle de la trame.

9. Dispositif (1000) selon l'une quelconque des revendications 6 à 8, le champ A3 étant représentatif d'un élément parmi une adresse de destination, DA, une adresse source, SA, ou un identifiant d'ensemble de services de base, BSSID.

10. Dispositif (1000) selon l'une quelconque des revendications 6 à 8,
le ou les champs cryptés comprenant en outre un autre A3 représentatif d'une valeur A3 réelle de la trame, la valeur A3 réelle étant une adresse de destination, DA, ou une adresse source, SA ; et
le champ A3 du ou des champs cryptés étant positionné à 0.

11. Dispositif (1000) selon la revendication 10,
le ou les champs cryptés comprenant en outre un autre champ A4 représentatif d'une valeur A4 réelle de la trame, la valeur A4 réelle étant une adresse de destination, DA, ou une adresse source, SA ; et
le champ A4 du ou des champs non cryptés étant positionné à 0.

12. Dispositif (1000) selon l'une quelconque des revendications 6 à 11, la trame étant une trame de données nulle de QoS.

13. Dispositif (1000) selon l'une quelconque des revendications 6 à 11, le ou les champs cryptés comprenant en outre un code d'intégrité de message pour le cryptage avec une clé de cryptage d'en-tête.

14. Procédé comprenant :
la génération d'une trame comprenant un en-tête de contrôle d'accès au support, MAC, comprenant un ou plusieurs champs non cryptés et un ou plusieurs champs cryptés, la trame étant une trame de données de qualité de service, QoS, et le ou les champs non cryptés comprenant un champ d'adresse 3, A3 ; et
le fait d'ordonner l'envoi de la trame à une ou plusieurs stations, STA (120) ;
le champ de contrôle de séquence étant configuré pour transporter une première partie d'un numéro de paquet, PN, associé à un en-tête de protocole de mode Galois/compteur, GCMP, pour crypter le ou les champs cryptés ; et
le champ de contrôle de QoS étant configuré pour porter une seconde partie du PN.

15. Support non transitoire lisible par ordinateur comprenant des instructions (1124) qui, si elles sont exécutées par un processeur, amènent le processeur à réaliser le procédé selon la revendication 14.
